# EUROPÄISCHE PATENTANMELDUNG

(11) **EP 2 399 540 A2**
(43) Veröffentlichungstag der Anmeldung: **28.12.2011**
(21) Anmeldenummer: 11005136.4
(22) Anmeldetag: 24.06.2011
(51) Int. Cl.: A61C 1/08, A61C 8/00

(54) **Enossales Kieferimplantat zum Einsetzen in eine in einem Kieferknochen vorbereitete Kavität und Schablone zur Einbringung der Kavität in den Kieferknochen**

(30) Priorität: 24.06.2010 DE 102010025023
(71) Anmelder: Teichmann, Gernot, 40545 Düsseldorf (DE)
(72) Erfinder: Teichmann, Gernot, 40545 Düsseldorf (DE)
(74) Vertreter: Cohausz Hannig Borkowski Wißgott

(57) **Zusammenfassung**

Die vorliegende Erfindung betrifft ein enossales Kieferimplantat (1) zum Einsetzen in eine in einem Kieferknochen (29) vorbereitete Kavität (27, 28) umfassend einen zentralen lmplantatkörper (9), an dem zumindest ein Verankerungsflügel (2) angeformt ist. Der Verankerungsflügel (2) ist im Querschnitt keilförmig ausgebildet, wobei sich zumindest die Vorderkante (3) und/oder die Rückseite (4) und/oder die Schwerpunktsachse (5) des Verankerungsflügels (2) sekantial von dem lmplantatkörper (9) wegerstreckt. Des Weiteren betrifft die Erfindung eine Schablone (10) zum Einbringen einer Kavität (28) in einen Kieferknochen (29), in die ein enossales Kieferimplantat (1) der vorgenannten Art einsetzbar ist. Die Schablone (10) hat einen im Wesentlichen quaderförmigen Grundkörper (11), der mit seiner Unterseite (17) auf den Kieferknochen aufsetzbar ist. An wenigstens einer Seite (12, 13) ist eine Öffnung (14) für ein Sägewerkzeug (30) vorgesehen, an die sich ein Führungskanal (15) zur Führung des Sägewerkzeugs (30) anschließt, der sich schräg durch den Grundkörper (11) zu dessen Unterseite (17) erstreckt. Mittels des Sägewerkzeugs (30) ist eine Kavität (28) herstellbar, in die der Verankerungsflügel (2) formschlüssig einsetzbar ist.

## Beschreibung

Die Erfindung betrifft eine Schablone zum Einbringen einer Kavität in einen Kieferknochen, in die ein enossales Kieferimplantat einsetzbar ist, mit einem im Wesentlichen quaderförmigen Grundkörper, der mit seiner Unterseite auf dem Kieferknochen aufsetzbar ist. Des Weiteren betrifft die Erfindung ein enossales Kieferimplantat zum Einsetzen in eine in einem Kieferknochen vorbereitete Kavität, umfassend einen zentralen lmplantatkörper, an dem zumindest ein Verankerungsflügel angeformt ist.

Implantate der genannten Art sind bekannt. Sie werden in den Kieferknochen eingedreht oder einsteckbar verankert und verbinden sich innerhalb von 3 bis 6 Monaten mit dem umgebenden Kieferknochen zu einer festen, äußerst belastungsfähigen Trägereinheit, auf die dann ein Zahnersatz aufgesetzt werden kann. Zahnimplantate übernehmen daher die Funktion künstlicher Zahnwurzeln.

Die heutzutage verwendeten lmplantatformen sind in der Regel rotationssymmetrisch und weisen einen zylindrischen, d.h. im Querschnitt kreisrunden Implantatkörper auf, der in eine entsprechend zylindrische Kavität eingesetzt werden kann. Die Kavität nimmt das Implantat entsprechend auf und wird in der Regel mit rotierenden Instrumenten, beispielsweise so genannten Kanonenbohrern in den Kieferknochen eingebracht. Der zylindrische lmplantatkörper weist üblicherweise an seiner Außenseite ein Gewinde auf, womit das lmplantat in die Kavität eingeschraubt werden kann. Man spricht daher bei derartigen Implantaten auch von Schraubenimplantaten. Der Vorteil von Schraubenimplantaten liegt darin, dass sie durch ihr Gewinde unmittelbar im Knochen verankert werden können. Darüber hinaus bietet das Gewinde eine vergleichsweise große Oberfläche, durch die das Implantat nach dem Verwachsen des Kieferknochens mit dem lmplantatkörper eine besonders hohe Festigkeit innerhalb des Kieferknochens erhält.

Aus dem deutschen Gebrauchsmuster DE 20 2006 012 830 U1 ist ein Kieferimplantat der genannten Gattung bekannt. Es weist einen Kern und ein radial an diesen Kern angeformtes Gewinde auf, wobei das Größenverhältnis Aussendurchmesser zu Kerndurchmesser gleich oder größer zwei ist. Die Breite des Gewindes in radialer Richtung ist folglich gleich oder größer als der Radius des lmplantatkerns, was zu einer besonders festen und dauerhaften Verankerung des lmplantats im Kieferknochen führen soll. Die in den Kieferknochen einzubringende Kavität weist demgemäß einen Innendurchmesser auf, der dem Außendurchmesser des Kerns entspricht, so dass hier beim Einbringen des lmplantatkörpers eine leichte Presspassung entsteht. Der lmplantatkörper wird durch eindrehen in den spongiösen Kieferknochen eingesetzt. Das Gewinde des lmplantatkörpers weist sehr flache Windungen auf, so dass der Kieferknochen axial leicht komprimiert wird.

Ein erheblicher Nachteil sämtlicher Schraubenimplantate besteht darin, dass der lmplantatkörper in seiner axialen Länge und/ oder in seinem Durchmesser vergleichsweise groß sein muss, um eine ausreichend große Oberfläche bereitzustellen, mit der der Kieferknochen zusammenwachsen kann..

Es ist daher ein Bedürfnis und eine daraus resultierende Aufgabe der vorliegenden Erfindung, ein Kieferimplantat mit einer neuartigen lmplantatgeometrie bereitzustellen, das bei vergleichsweise geringer Kontaktoberfläche eine sehr kurze Bauhöhe besitzt und somit auch in Bereichen zur Anwendung kommen kann, wo nur wenig Knochenhöhe zur Verfügung steht. Des Weiteren ist es Aufgabe der Erfindung, eine Schablone zur Führung eines Sägewerkzeugs bereitzustellen, mit dem die Kavität für das erfindungsgemäße Kieferimplantat passgenau in den Kieferknochen eingebracht werden kann.

Diese Aufgabe wird durch eine Schablone mit den Merkmalen des Anspruchs 1 und durch ein Kieferimplantat mit den Merkmalen des Anspruchs 12 gelöst. Vorteilhafte Weiterbildungen des Kieferimplantats respektive der Schablone sind in den entsprechenden Unteransprüchen genannt.

Erfindungsgemäß wird ein enossales Kieferimplantat zum Einsetzen in eine in einem Kieferknochen vorbereitete Kavität umfassend einen zentralen lmplantatkörper, an den zumindest ein Verankerungsflügel angeformt ist, vorgeschlagen, wobei der Verankerungsflügel im Querschnitt keilförmig ausgebildet ist und sich zumindest die Vorderkante und/oder die Rückseite und/oder die Schwerpunktsachse des Verankerungsflügels sekantial von dem lmplantatkörper wegerstreckt.

Die neue Kieferimplantatgeometrie mit wenigstens einem im Querschnitt keilförmigen Verankerungsflügel, der sich sekantial von dem lmplantatkörper wegerstreckt, hat den Vorteil, dass kein Einschrauben des Implantats in den Kieferknochen mehr notwendig ist. Dies bedeutet, dass das Implantat nicht mehr um eine oder mehrere volle Umdrehungen bewegt werden muss, um vollständig in den Kieferknochen eingesetzt zu werden. Vielmehr ist weniger als eine halbe Umdrehung, insbesondere weniger als eine Viertelumdrehung notwendig, um das Implantat in den Kieferknochen einzusetzen.

Dabei wird das vereinfachte Einsetzen des Kieferimplantats auch dadurch erreicht, dass die Geometrie der in den Kieferknochen einzubringenden Kavität gegenüber dem Stand der Technik geändert ist und nicht mehr nur eine Bohrung in Gestalt eines Sacklochs ist. Vielmehr ist die Kavität von einem zentralen, im Wesentlichen zylindrischen Hohlraum gebildet, an dem sich an zumindest einer Seite eine im Querschnitt keilförmige Ausnehmung anschließt, in den der Verankerungsflügel formschlüssig einsetzbar ist. Beim Einsetzen des Kieferimplantats in eine derartige Kavität gleitet der Verankerungsflügel in die keilförmige Ausnehmung, bis es mit seiner Vorderkante an dem vorderen Ende der Ausnehmung anstößt und damit formschlüssig in der Ausnehmung einliegt. Dabei vollführt das Kieferimplantat samt Verankerungsflügel je nach Ausführungsvariante eine Drehbewegung zwischen 30° und 60°. Das Implantat kann demgemäß in einem Winkel zwischen 30° und 60° versetzt zu seiner endgültigen Position an die obere Kavitätsöffnung im Kieferknochen aufgesetzt werden. Das lmplantat gleitet dann auf der unteren Fläche des keilförmigen Verankerungsflügels unter Ausführung der Drehbewegung zwischen 30° und 60° in den formschlüssigen Sitz seiner Endposition. Dadurch werden ein optimaler Sitz des Kieferimplantats im Kieferknochen und eine hohe Retentionswirkung erreicht. Das erfindungsgemäße Kieferimplantat bietet somit eine einfache Einbringbarkeit mit minimaler rotatorischer Bewegung.

Im Sinne der vorliegenden Erfindung wird unter dem Begriff "sekantial" der Verlauf einer Geraden verstanden, die die Schnittfläche einer Radialebene durch den lmplantatkörper zweimal schneidet und nicht durch den Mittelpunkt dieser Querschnittsfläche verläuft, d.h. die Sekante nicht mit dem Durchmesser der Querschnittsfläche zusammenfällt.

Vorzugsweise ist der Profilquerschnitt des Verankerungsflügels über seine sekantiale Länge gleich. Dies bedeutet, dass die Vorderkante, die Rückseite und die Schwerpunktsachse eines Verankerungsflügels parallel verlaufen, so dass sich der Verankerungsflügel sekantial von dem lmplantatkörper wegerstreckt. Er erstreckt sich dabei nicht radial, weil weder die Vorderkante, noch die Rückseite und auch nicht die Schwerpunktsachse durch den Mittelpunkt der genannten Querschnittsfläche verlaufen.

Gemäß einer vorteilhaften Weiterbildung des erfindungsgemäßen Kieferimplantats können an dem lmplantatkörper zwei sich gegenüber liegende Verankerungsflügel angeformt sein. Hierdurch wird ein festerer Sitz des Kieferimplantats im Kieferknochen erreicht, da durch den zweiten Verankerungsflügel eine zusätzliche Retentionswirkung erzielt wird. Vorzugsweise sind die beiden Verankerungsflügel geometrisch identisch ausgeführt, so dass eine 180°-Symmetrie des lmplantatkörpers erhalten wird, d.h. eine Achsensymmetrie zur Mittelpunktsachse des lmplantatkörpers.

Der lmplantatkörper kann zahnfleischseitig eine profilierte Vertiefung zum Eingriff eines Drehwerkzeuges aufweisen. Auf diese Weise kann das Kieferimplantat leicht in die Kavität eingesetzt werden. Beispielsweise kann die Vertiefung durch einen Schlitz oder eine mehrkantige, insbesondere sechskantige Ausnehmung gebildet sein, so dass als Drehwerkzeug, beispielsweise ein gängiger Schraubendreher oder ein Inbusschlüssel verwendbar ist. Es kann jedoch auch jede andere Mehrkantige Vertiefung zum Eingriff eines Drehwerkzeugs in dem lmplantatkörper vorgesehen werden.

Vorzugsweise kann der und/oder können die Verankerungsflügel eine maximale sekantiale Länge zwischen 3 mm und 7 mm, insbesondere zwischen 4 mm und 6 mm, vorzugsweise 5 mm aufweisen. Je höher hierbei die sekantiale Länge gewählt wird, umso höher ist die Retentionswirkung eines Flügels im Kieferknochen. Jedoch ist mit zunehmender sekantialer Länge auch eine größere Kavität erforderlich, d.h., dass eine größere Knochenmenge aus dem Kieferknochen entfernt werden muss, um das Kieferimplantat einsetzen zu können. Zur Minimierung eines derartigen invasiven Eingriffs ist daher ein Kompromiss zwischen Retentionswirkung und Kavitätsvolumen zu finden. Die sekantiale Länge eines Verankerungsflügels ist der maximale Abstand der Stirnseite des Verankerungsflügels zu der Axialebene, die durch die Mittelpunktsachse des lmplantatkörpers verläuft und parallel zur Stirnseite des Verankerungsflügels ist. Bei der Ausführungsvariante des Implantats mit zwei Verankerungsflügeln beträgt dessen Länge von der Stirnseite eines Verankerungsflügels zur Stirnseite des anderen Verankerungsflügels vorzugsweise zwischen 8 mm und 12 mm, insbesondere etwa 10 mm.

Vorzugsweise kann der oder können die Verankerungsflügel eine Oberseite und eine Unterseite aufweisen, die in einem Winkel zwischen 15° und 30°, insbesondere zwischen 20° und 22° zueinander liegen. Die Ober- und Unterseite eines Verankerungsflügels bilden dadurch einen spitzen Winkel, der die Keilform des Flügels definiert. Hierdurch wird eine Verankerungsflügelgeometrie erreicht, die nur eine minimale Ausnehmung in dem Kieferknochen für den Verankerungsflügel benötigt, um eine hohe Retentionswirkung zu erreichen. Zusätzlich kann eine hohe Retentionswirkung dadurch erreicht werden, dass die zum Zahnfleisch gerichtete Oberfläche eines Verankerungsflügels in einer Ebene liegt, die gegenüber der Axialebene des lmplantatkörpers um einen Winkel zwischen 20° und 35° gekippt ist. Unter einer Axialebene wird in diesem Sinne eine solche Ebene verstanden, in der die Mittelpunktsachse des lmplantatkörpers einliegt. Die Retentionswirkung wird dabei umso höher, je stärker die Oberfläche gegenüber der genannten Axialebene gekippt ist. Ein Kippen in einem zu geringen Winkel von weniger als 20° kann dazu führen, dass das Implantat aus der Kavität heraus fällt. Des Weiteren ist die Ausbildung eines Verankerungsflügels mit einer Oberfläche die mehr als 35° gekippt ist nur schwierig in die Kavität einsetzbar oder kann in diese gar nicht mehr eingesetzt werden.

Die Keilform eines Verankerungsflügels im Querschnitt bedeutet, dass sich ein Verankerungsflügel in Richtung der Drehbewegung beim Einsetzen in die Kavität verjüngt respektive entgegen dieser Drehrichtung verbreitert. Entsprechend weist ein derartiger Verankerungsflügel eine Oberseite und eine Unterseite auf, die in einem spitzen Winkel auf eine Vorderkante zulaufen, welche sich in Drehrichtung beim Einsetzen des Implantats vorne befindet. Auf der der Vorderkante gegenüberliegenden Seite verbindet ein Rücken die Ober- und Unterseite, der die Keilform abschließt. Vorzugsweise liegt die Rückseite eines Verankerungsflügels in einer Sekantialebene, insbesondere einer Tangentialebene an den lmplantatkörper. Dies bedeutet, dass der Rücken bzw. die Rückseite eines Verankerungsflügels in einem Winkel an die Mantelfläche des lmplantatkörpers stößt oder, im Falle einer Tangentialebene, bündig in die Mantelfläche des lmplantatkörpers übergeht.

Vorzugsweise ist die Vorderseite eines Verankerungsflügels abgerundet. Hierdurch wird verhindert, dass sich der Flügel beim Einsetzen in die Kavität verkantet. Der Einsetzvorgang wird dadurch vereinfacht.

Vorzugsweise sind die sekantialen Schwerpunktsachsen der gegenüberliegenden Verankerungsflügel zu dem Durchmesser eines Schnittkreises durch den lmplantatkörper in einer Radialebene in gleichem Maß entgegengesetzt versetzt. Dies bedeutet, dass die Schwerpunktsachsen der gegenüberliegenden Verankerungsflügel nicht auf derselben Geraden liegen, d.h. die Verankerungsflügel selbst zueinander versetzt sind, wobei die Schwerpunktsachsen jedoch in derselben Radialebene, d.h. bezogen auf die axiale Länge des lmplantatkörpers auf derselben Höhe liegen. Hieraus folgt entsprechend, dass die Vorderkante eines Verankerungsflügels nicht in einer Tangente an den Mantel des lmplantatkörpers liegt sondern vielmehr parallel zu einer solchen Tangente zurückversetzt ist.

Die beschriebenen vorteilhaften Ausgestaltungen der Geometrie des Kieferimplantats berücksichtigen die Schwierigkeit der Einbringung der Kavität in den Kieferknochen, insbesondere die Einbringung der Ausnehmung für den bzw. die Verankerungsflügel. Da das Implantat durch eine Drehbewegung in den Kieferknochen eingesetzt werden muss, muss sich die keilförmige Ausnehmung für den Verankerungsflügel zum Sattel des Kieferknochens hin öffnen. Die vorgenannten vorteilhaften Merkmale des Kieferimplantats bewirken, dass nur eine minimale Menge des Kieferknochens entfernt werden muss und ein weitgehend formschlüssiger Sitz der Verankerungsflügel in der Kavität erreicht wird, ohne dass nach dem Einsetzen des Implantats Hohlräume zwischen diesem und dem Kieferknochen vorliegen. Derartige Hohlräume sind zu vermeiden, da sich hierdurch die Heildauer erheblich verlängert, d.h. die Dauer bis der Kieferknochen mit dem Implantat vollständig verwachsen ist. Aus diesem Grunde ist der lmplantatkörper bevorzugt rotationssymmetrisch zu wählen, d.h. vorzugsweise zylindrisch.

Zum Einbringen der Kavität in den Kieferknochen wird eine Schablone vorgeschlagen, mit einem im wesentlichen quaderförmigen Grundkörper, der mit seiner Unterseite auf den Kieferknochen aufsetzbar ist, wobei an wenigstens einer Seite eine Öffnung für ein Sägewerkzeug vorgesehen ist, an die sich ein Führungskanal zur Führung des Sägewerkzeugs anschließt, der sich schräg durch den Grundkörper zu dessen Unterseite erstreckt. Die Schablone stellt ein Hilfswerkzeug dar, in dem wenigstens ein Sägewerkzeug geführt werden kann, mittels welchem derjenige Teil der Kavität hergestellt werden kann, der einen Verankerungsflügel des Kieferimplantats aufnimmt.

Der Winkel, in dem sich der Führungskanal gegenüber der Horizontalen durch den Grundkörper der Schablone zu dessen Unterseite erstreckt, kann zwischen 30° und 70° betragen. Der Führungskanal dient der Aufnahme und gleitenden Führung eines Sägewerkzeugs, mittels welchem der Teilbereich der Kavität ausformbar ist, in dem später der Verankerungsflügel des Kieferimplantats formschlüssig einliegt. Aus diesem Grunde ist der Winkel des Führungskanals derart gewählt, dass er an die Keilform der auszubildenden Kavität angepasst ist.

In einer bevorzugten Ausführung weist der Führungskanal einen rechteckigen Querschnitt auf. Dies hat den Vorteil, dass das Sägewerkzeug an vier Seiten geführt werden kann. Alternativ kann der Führungskanal auch einer oder mehr Innenseiten konkav ausgebildet sein, entsprechend der konkreten Ausgestaltung des bzw. der Verankerungsflügel.

Des Weiteren ist es von Vorteil, wenn der Grundkörper der Schablone in Erstreckungsrichtung des Führungskanals durch eine Erweiterung verlängert ist. Hierdurch erhält der Grundkörper in Erstreckungsrichtung des Führungskanals ein größeres Volumen und bietet dadurch größere Anlageflächen für das Sägewerkzeug. Es kann dadurch besser in dem Führungskanal geführt werden, wodurch eine präzise Aushöhlung der für den Verankerungsflügel notwendigen Teilkavität gewährleistet wird.

An der Unterseite des Grundkörpers kann ein zentraler Zapfen zum Einsetzen der Schablone in eine in den Kieferknochen eingebrachte Bohrung angeformt sein. Die Bohrung in dem Kieferknochen dient der späteren Aufnahme des lmplantatkörpers. Durch den Zapfen kann die Schablone an dem Kieferknochen in zwei Richtungen fixiert werden, d.h. längs und quer zum Kieferknochensattel. Lediglich ein Verdrehen der Schablone in ihrem mit dem Zapfen in der Bohrung eingesetzten Zustand wäre dann noch möglich. Dies kann dadurch verhindert werden, dass die Schablone durch wenigstens ein Befestigungsmittel am Kieferknochen fixiert wird. Hierzu kann in der Schablone beispielsweise wenigstens eine Bohrung für einen Stift oder eine Schraube oder auch ein sonstiges Befestigungsmittel vorgesehen sein, das durch die Schablone hindurch geführt ist und in dem Kieferknochen fest einliegt.

Da sich ein Verankerungsflügel des lmplantatkörpers sekantial von diesem wegerstreckt und eine gewisse Breite aufweist, ist die Schnittfläche zwischen einem Verankerungsflügel und dem Mantel des lmplantatkörpers, d.h. die Fläche, in der ein Verankerungsflügel in den lmplantatkörper übergeht, im Wesentlichen C-förmig ausgebildet. Für die Herstellung der für den Verankerungsflügel vorgesehenen Teilkavität muss sich die Verlängerung des Führungskanals in der Schablone deshalb zumindest teilweise in die im Kieferknochen eingebrachte Bohrung erstrecken. Da sich jedoch bei auf dem Kieferknochen montiertem Zustand der Schablone der Zapfen in dieser Bohrung befindet, ist es sinnvoll, dass der Zapfen in seinem Teilbereich, der in der Verlängerung des Führungskanals steht, abgeflacht ist. Anderenfalls würde das in den Führungskanal eingebrachte Sägewerkzeug den Zapfen ansägen, respektive schleifen. Dies sollte jedoch verhindert werden. Durch die Abflachung geht die obere innere Anlagefläche des Führungskanals je nach zu verwendendem Sägewerkzeug bündig oder in einem stumpfen Winkel in die durch die Abflachung gebildete Teilfläche des Zapfens über.

Die Abflachung des Zapfens kann einen Winkel zwischen 20° und 35° mit der vertikalen bilden. Der Winkel entspricht demjenigen Winkel, um den die Oberseite eines Verankerungsflügels gegenüber der Vertikalen bzw. der Axialebene gekippt ist. Die Abflachung liegt daher in derselben Ebene wie die Innenfläche des für den Verankerungsflügel vorgesehenen Teilbereichs der Kavität, an der die Oberseite eines Verankerungsflügels im eingesetzten Zustand anliegt.

In einer bevorzugten Weiterbildung der erfindungsgemäßen Schablone weist diese eine zweite Öffnung für ein Sägewerkzeug auf, die auf der der ersten Öffnung gegenüberliegenden Seite der Schablone angeordnet ist, wobei sich an diese zweite Öffnung ein zweiter Führungskanal anschließt, der sich schräg durch den Grundkörper zu dessen Unterseite erstreckt. Diese Ausführungsvariante dient der Herstellung einer Kavität im Kieferknochen, die zur Aufnahme eines Kieferimplantats mit zwei gegenüberliegenden Verankerungsflügeln vorgesehen ist. Eine derartige Schablone hat den Vorteil, dass sie nach der Herstellung der Teilkavität für den ersten Verankerungsflügel nicht umgesetzt werden muss, d.h. vom Kieferknochen gelöst und wieder montiert werden muss, um die Teilkavität für den zweiten Verankerungsflügel in dem Kieferknochen herzustellen. Es wird damit ein Arbeitsschritt eingespart, was das Verfahren zur Einbringung der Kavität erleichtert und zeitlich verkürzt.

Da sich die beiden Verankerungsflügel gegenüberliegend sekantial von dem lmplantatkörper wegerstrecken, sollten die beiden Führungskanäle in Richtung der Breite der Schablone zueinander versetzt liegen. Dies bedeutet, dass die Schablone 180°-symetrisch zur Mittelpunktsachse des Zapfens sein sollte.

Vorzugsweise können die beiden Führungskanäle bis zur Mitte der Breite der Schablone heranreichen. Dies erzeugt am oberen Ende der in den Kieferknochen eingebrachten Bohrung eine sich öffnenden Kavitätserweiterung mit einem Umfangswinkel von bis zu 60°, so dass ein vertikales Einsetzen des Kieferimplantats in die Bohrung respektive ein teilweises Einsetzen der Verankerungsflügel in Kavitätserweiterung ermöglicht wird. Das Einsetzen erfolgt in einer um zwischen 30° und 60° gegenüber der Endlage versetzten Position, wobei das eingesetzte Implantat anschließend auf der unteren Schräge der Teilkavität unter Ausführung einer Drehbewegung nach unten gleitet, bis die Vorderkante eines Verankerungsflügels an das Ende der entsprechenden Teilkavität anstößt.

Vorzugsweise kann oberhalb eines Führungskanals eine Ausspülöffnung vorgesehen sein, die sich in den entsprechenden Führungskanal hineinerstreckt. Durch diese Öffnung kann Spülwasser eingebracht respektive abgesaugt werden, so dass durch das Sägewerkzeug entferntes Knochenmaterial aus der Kavität herausspülbar ist. Die Ausspülöffnung kann beispielsweise als Langloch ausgebildet sein, das in seiner Längsrichtung parallel zur Erstreckungsrichtung eines Führungskanals liegt.

Vorzugsweise ist die Schablone symmetrisch zu ihrer Mittelpunktsachse. Dabei handelt es sich um eine Achsensymmetrie bezogen auf die durch den Zapfen verlaufende Mittelachse.

Weitere Merkmale und Vorteile des erfindungsgemäßen Kieferimplantats sowie der erfindungsgemäßen Schablone können der nachfolgenden detaillierten Erläuterung zweier Ausführungsbeispiele samt den beigefügten Figuren entnommen werden. Es zeigen:
- Figur 1:: Schematische Darstellung der Gesamtanordnung aus Kieferknochen, Kieferimplantat und Schablone mit Sägewerkzeug
- Figur 2:: Kieferimplantat gemäß einer ersten Ausführungsvariante in perspektivischer Darstellung
- Figur 3:: Kieferimplantat nach Figur 2 in Draufsicht
- Figur 4:: Kieferimplantat nach Figur 2 in Seitenansicht
- Figur 5:: Kieferimplantat nach Figur 2 in Vorderansicht
- Figur 6:: Kieferimplantat nach Figur 2 in einem Axialschnitt entlang der Schnittlinie A-A gemäß Figur 3
- Figur 7:: Kieferimplantat gemäß einer zweiten Ausführungsvariante
- Figur 8:: Kieferimplantat nach Figur 7 in Draufsicht
- Figur 9:: Kieferimplantat nach Figur 7 in Seitenansicht
- Figur 10:: Kieferimplantat nach Figur 7 in Vorderansicht
- Figur 11:: Kieferimplantat nach Figur 7 in einer Schnittansicht entlang der Schnittlinie B-B gemäß Figur 8
- Figur 12:: Schablone gemäß einer ersten Ausführungsvariante zur Einbringung einer Kavität in einen Kieferknochen für ein lmplantat gemäß Figur 2
- Figur 13:: Schablone nach Figur 12 in Draufsicht
- Figur 14:: Schablone nach Figur 12 in Seitenansicht
- Figur 15:: Schablone nach Figur 12 in Schnittansicht entlang der Schnittlinie C-C gemäß Figur 13
- Figur 16:: Schablone gemäß einer zweiten Ausführungsvariante zur Einbringung einer Kavität in einen Kieferknochen für ein Implantat gemäß Figur 7
- Figur 17:: Schablone nach Figur 16 in Draufsicht
- Figur 18:: Schablone nach Figur 17 in Seitenansicht
- Figur 19:: Schablone nach Figur 18 in Schnittansicht entlang der Schnittlinie D-D gemäß Figur 17
- Figur 20:: Sägewerkzeug in Seitenansicht
- Figur 21:: Sägewerkzeug in perspektivischer Ansicht

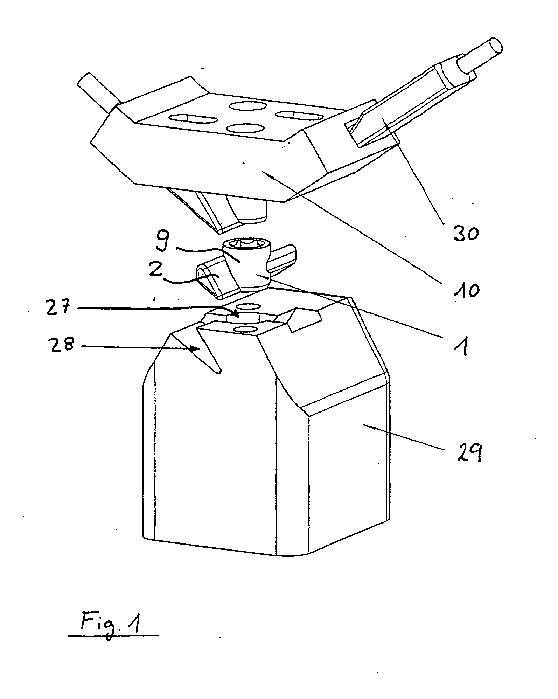

Figur 1 zeigt eine Gesamtdarstellung in der Art einer Explosionszeichnung der Anordnung eines erfindungsgemäßen Kieferimplantats 1 vor einer Kavität 27, 28, die in einen Kieferknochen 29 eingebracht ist. Der Kieferknochen 29 ist in Figur 1 lediglich stilisiert dargestellt und dient der Veranschaulichung. Das Kieferimplantat 1 weist einen zentralen, zylindrischen lmplantatkörper 9 und zwei Verankerungsflügel 2 auf, die sich gegenüberliegen und sekantial von dem lmplantatkörper 9 wegerstrecken. Der lmplantatkörper 9 und die Verankerungsflügel 2 sind einstückig ausgebildet und aus einem Metall gefertigt. Die Kavität 27, 28 besteht aus einer ersten Teilkavität 27, die für den lmplantatkörper 9 vorgesehen ist, sowie aus zwei sich gegenüberliegenden Teilkavitäten 28 für die Verankerungsflügel 2.

Des Weiteren ist in Figur 1 eine erfindungsgemäße Schablone 10 dargestellt, die auf den Kieferknochen 29 aufsetzbar ist. Mittels Sägewerkzeugen 30 können die Teilkavitäten 28 für die Verankerungsflügel 2 des Kieferimplantats 1 in den Kieferknochen 29 eingebracht werden, wenn die Schablone 10 auf den Kieferknochen 29 montiert ist. Dies wird nachfolgend im Einzelnen noch erläutert.

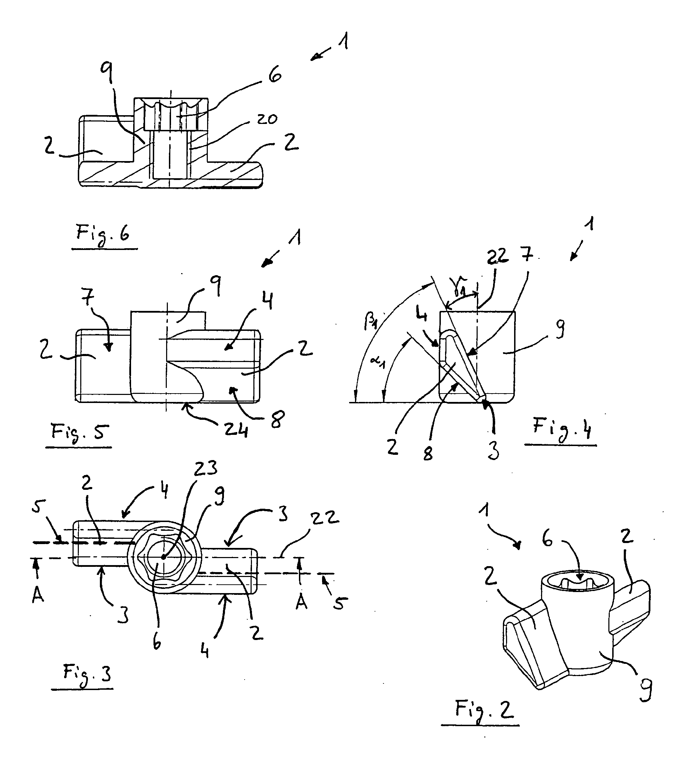

Figur 2 zeigt ein enossales Kieferimplantat 1 in perspektivischer Darstellung. Der zentrale lmplantatkörper 9 ist zylindrisch ausgebildet. Die beiden gegenüberliegenden Verankerungsflügel 2 sind an diesen einstückig angeformt. Jeder der beiden Verankerungsflügel 2 ist im Querschnitt keilförmig ausgebildet und erstreckt sich sekantial von dem lmplantatkörper 9 weg, wobei der Profilquerschnitt der Verankerungsflügel 2 über ihre sekantiale Länge gleich bleibt.

Der lmplantatkörper 9 weist zahnfleischseitig eine profilierte Vertiefung 6 auf, in die ein Drehwerkzeug eingreifen kann. Die Vertiefung 6 ist in Gestalt eines Innensechskants ausgebildet, so dass ein entsprechender Inbusschlüssel in die Vertiefung 6 eingreifen kann. Auf diese Weise kann ein Drehmoment mittels eines Werkzeuges auf das Kieferimplantat 1 ausgeübt werden, um dieses in die Kavität 27, 28 im Kieferknochen 29 mittels einer Drehbewegung einzusetzen. Des Weiteren dient die profilierte Vertiefung 6 zur Aufnahme eines lmplantatkopfes, in der Fachsprache auch Abutment genannt. Der lmplantatkopf erstreckt sich durch die Gingva und dient wiederum zur Aufnahme eines Zahnersatzes. Alternativ können lmplantatkopf und Zahnersatz auch einteilig ausgebildet sein. Zur Verankerung des lmplantatkopfes an dem lmplantatkörper 9 kann am Boden der Vertiefung 6 eine Bohrung mit einem Innengewinde 20 vorhanden sein, über das der lmplantatkopf mit dem lmplantatkörper 9 verschraubbar ist.

Figur 3 zeigt das erfindungsgemäße Kieferimplantat 1 in einer Draufsicht. Die Vorderkante 3, Rückseite 4 und Schwerpunktsachse 5 eines Verankerungsflügels 2 erstrecken sich parallel zueinander und verlaufen jeweils sekantial zum lmplantatkörper 9. Dies bedeutet, dass sie auf einer Geraden liegen, die den lmplantatkörper 9 in einer radialen Schnittebene zweimal schneidet. Da sowohl die Vorderkante 3 als auch die Rückseite 4 und die Schwerpunktsachse 5 sekantial zum lmplantatkörper 9 verlaufen, erstreckt sich entsprechend ein gesamter Verankerungsflügel 2 sekantial vom lmplantatkörper 9 weg. Diese Eigenschaft wäre jedoch allgemein auch bereits dann erfüllt, wenn ausschließlich die Schwerpunktsachse 5 sekantial zum lmplantatkörper 9 verläuft. Die Schwerpunktsachse ist diejenige Achse, die durch die Summe aller Schwerpunkte der Querschnitte eines Verankerungsflügels gebildet ist. Da die Verankerungsflügel 2 im Querschnitt keilförmig ausgebildet sind, ist ihr Querschnittsprofil im Wesentlichen dreieckig, so dass der Schwerpunkt einer Querschnittsfläche durch den Schnittpunkt der Seitenhalbierenden des Querschnittdreiecks gebildet ist. Dies wird aus Figur 4 deutlich, die den Profilquerschnitt eines Verankerungsflügels 2 zeigt. Die Ecken des Querschnittsprofils sind abgerundet.

Aus Figur 3 wird deutlich, dass die Rückseite 4 der Verankerungsflügel 2 in einer Tangentialebene an den lmplantatkörper 9 liegen, d.h. bündig in die Mantelfläche des lmplantatkörpers 9 übergehen. Demgegenüber ist die Vorderkante 3 gegenüber einer zur Rückseite 4 parallelen und dieser gegenüberliegenden Tangentialebene zurückversetzt. Dies bedeutet, dass ein Verankerungsflügel 2 bei der Normalprojektion in Draufsicht eine Breite aufweist, die geringer als der Durchmesser des lmplantatkörpers 9 ist. Ferner ist diese Breite wie in Figur 3 gezeigt etwa 20% größer als der halbe Durchmesser des lmplantatkörpers 9. ln Figur 3 ist des Weiteren ersichtlich, dass auch die Schwerpunktsachse 5 sekantial zum lmplantatkörper 9 verläuft. Weder die Vorderkante 3, noch die Schwerpunktsachse 5 liegen auf einem Durchmesser eines radialen Querschnittskreises des lmplantatkörpers 9.

Die sekantialen Schwerpunktsachsen 5 der gegenüberliegenden Verankerungsflügel 2 sind zu dem Durchmesser eines Schnittkreises durch den lmplantatkörper 9 in einer Radialebene im gleichen Maß entgegengesetzt versetzt. Es wird deutlich, dass das Kieferimplantat 1 symmetrisch zur Mittelpunktsachse 23 ist und der in Figur 3 rechtsseits dieser Achse 23 liegende Teil des Kieferimplantats 1 durch eine 180°-Drehung um die Mittelpunktsachse 23 in den links der Mittelpunktsachse 23 liegenden Teil überführt werden kann.

Figur 4 zeigt das erfindungsgemäße Kieferimplantat 1 in einer Seitenansicht auf die Stirnseite eines Verankerungsflügels 2. Der keilförmige Querschnitt des Verankerungsflügels 2 wird hier deutlich. Er weist eine Oberseite 7 und eine Unterseite 8 auf, die in einem spitzen Winkel zur Vorderkante 3 verlaufen. Ferner wird aus dieser Figur deutlich, dass die Vorderkante 3, wie auch die übrigen Kanten abgerundet ist. Die Vorderkante 3 ist derjenige Teil des Verankerungsflügels, der in Einsetzrichtung des Kieferimplantats 1, d.h. bei der Drehbewegung vorne liegt.

Die Unterseite 8 schließt mit der Horizontalen einen Winkel α1 von 45° ein. Ferner schließt die Oberseite 7 mit der Horizontalen einen Winkel β1 von ca. 65,2° ein, so dass die Oberseite 7 und die Unterseite 8 in einem Winkel von etwa 20,2° zueinander liegen. Entsprechend liegt die zum Zahnfleisch gerichtete Oberseite 7 des Verankerungsflügels 2 in einer Ebene, die gegenüber der Axialebene 22 des lmplantatkörpers 9 um einen Winkel γ1von 24,8° gekippt ist.

Figur 5 zeigt eine Frontalansicht des Kieferimplantats 1 gemäß Figur 2. Das Kieferimplantat hat eine Gesamtbreite von der Stirnseite eines Verankerungsflügels 2 zur Stirnseite des anderen Verankerungsflügels von etwa 10mm. Der Durchmesser des lmplantatkörpers 9 beträgt ca. 4mm. Seine Höhe liegt bei etwa 5mm, wohingegen die Höhe der Verankerungsflügel etwa 4mm beträgt. Dies bedeutet, dass sich der lmplantatkörper 9 in seiner axialen Höhe über die obere Kante eines Verankerungsflügels 2 um etwa 1 mm hinauserstreckt. Dies hat den Vorteil, dass sich auch oberhalb der Verankerungsflügel 2 Knochenmaterial bilden kann, so dass der lmplantatkörper 9 nach der Verheilung von Kieferknochenmaterial vollständig umgeben ist und aus dem Kieferknochen 29 ausreichend herausragt um einen lmplantatkopf aufzunehmen.

In Figur 5 ist gut ersichtlich, dass die Rückseite 4 in einer Tangentialebene liegend bündig in die Mantelfläche des lmplantatkörpers 9 übergeht. Ferner geht die Unterkante der Vorderseite 3 bündig in die Bodenfläche 24 des lmplantatkörpers 9 über.

Figur 6 zeigt einen Schnitt durch das Kieferimplantat 1 nach Figur 2 entlang der Schnittlinie A-A aus Figur 3. Deutlich erkennbar ist die profilierte Vertiefung 6 im lmplantatkörper 9 an die sich bodenseitig eine Bohrung mit einem Gewinde 20 anschließt, so dass ein lmplantatkopf mit dem lmplantatkörper 9 verschraubt werden kann.

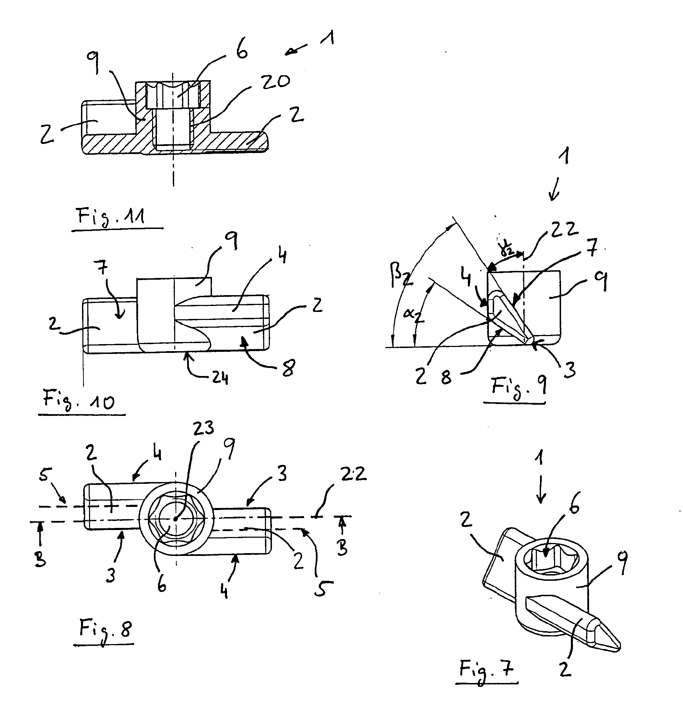

Die Figuren 7 bis 11 zeigen eine zweite Ausführungsvariante des erfindungsgemäßen enossalen Kieferimplantats 1, das sich gegenüber der in den Figuren 2 bis 6 dargestellten Ausführungsvariante darin unterscheidet, dass die axiale Höhe des lmplantatkörpers 9 geringer ist. Sie beträgt bei der zweiten Ausführungsvariante in etwa 4mm. Auch hier steht der lmplantatkörper 9 in der axialen Höhe etwa 1 mm über der Oberkante der Verankerungsflügel 2. Folgemäßig beträgt die Gesamthöhe der Verankerungsflügel 2 in axialer Richtung etwa 3mm. Daraus folgt wiederum, dass auch die Winkel der Oberseite 7 und der Unterseite 8 zur Horizontalen respektive zu einer axialen Schnittebene geändert sind. So beträgt der Winkel α2 zwischen der Unterseite 8 und der Horizontalen 35°, wohingegen der Winkel β2 zwischen der Oberseite 7 und der Horizontalen etwa 56,4° beträgt. Die Oberseite 7 und die Unterseite 8 eines Verankerungsflügels sind folglich gegenüber der ersten Ausführungsvariante flacher ausgebildet. Die Oberseite 7 und Unterseite 8 schließen einen Winkel von 21,4° ein. Die Oberseite 7 ist gegenüber der Axialebene 22 um den Winkel γ2 von etwa 33,6° gekippt.

Im Übrigen weist das Kieferimplantat 1 gemäß der zweiten Ausführungsvariante in den Figuren 7 bis 11 dieselben technischen Merkmale auf wie das erste Kieferimplantat 1 gemäß den Figuren 2 bis 6.

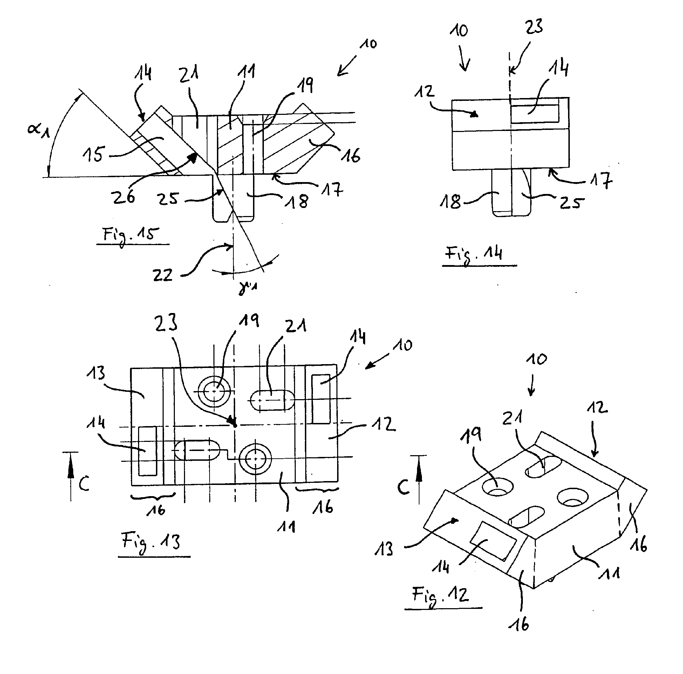

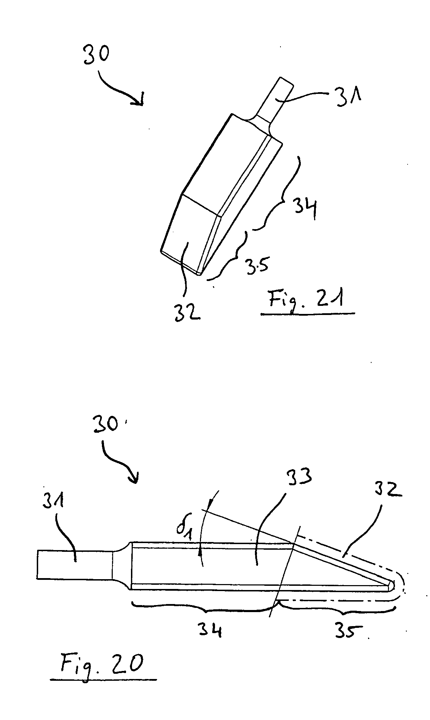

Figuren 12 bis 15 zeigen eine erste Ausführungsvariante der erfindungsgemäßen Schablone 10 zum Einbringen zumindest eines Teilbereichs 28 einer Kavität 27, 28 für ein erfindungsgemäßes Kieferimplantat 1 in einen Kieferknochen 29. Die Schablone 10 weist einen im Wesentlichen quaderförmigen Grundkörper 11 auf, der mit seiner Unterseite 17 auf den Kieferknochen 29 aufgesetzt werden kann. Der Grundkörper 11 weist Erweiterungen 16 auf, die sich vom Grundkörper schräg nach oben erstrecken, siehe Figur 12. An beiden Seiten 12, 13 ist jeweils eine Öffnung 14 vorgesehen, in die ein Sägewerkzeug 30, siehe Figuren 20 und 21, eingeführt werden kann. An die Öffnungen 14 schließt sich ein Führungskanal 15 an, der sich schräg durch den Grundkörper 11 zu dessen Unterseite 17 erstreckt, siehe Figur 15.

Die Führungskanäle 15 sind im Querschnitt rechteckig ausgebildet und führen das im Querschnitt entsprechend rechteckig ausgebildete Sägewerkzeug 30. Oberhalb der Führungskanäle 15 sind Ausspülöffnungen 21 in Gestalt von Langlöchern ausgebildet, die sich in den entsprechenden Führungskanal 15 hineinerstrecken. Des Weiteren sind zwei Bohrungen 19 in dem Grundkörper 11 der Schablone 10 vorgesehen, die sich durch den Grundkörper 11 hindurcherstrecken und zur Aufnahme eines Befestigungsmittels, insbesondere zur Aufnahme einer Schraube dienen. Oberseitig sind die Kanten der Bohrungen 19 abgeflacht, so dass entsprechend eine Senkkopfschraube zur Befestigung der Schablone 10 auf dem Kieferknochen 29 verwendet werden kann.

Figur 13 zeigt eine Darstellung der erfindungsgemäßen ersten Ausführungsvariante der Schablone 10 in Draufsicht. Es wird deutlich, dass die beiden Öffnungen 14 und entsprechend auch die Führungskanäle 15 in Richtung der Breite der Schablone 10 zueinander versetzt sind und bis zur Mitte der Breite der Schablone 10 heran reichen. Die Schablone 10 ist symmetrisch zur Mittelpunktsachse 23 ausgebildet, wobei der rechtsseitig der Mittelpunktsachse 23 liegende Teilbereich der Schablone 10 durch eine 180°-Drehung um die Mittelpunktsachse 23 in den links von der Mittelpunktsachse in Figur 13 liegenden Teil der Schablone 10 überführt werden kann.

Figur 14 zeigt eine Seitenansicht der Schablone 10 mit Blick auf die Seite 12. An die Unterseite 17 des Grundkörpers 11 ist ein Zapfen 18 angeformt, mittels welchem die Schablone 10 in eine in dem Kieferknochen 29 vorbereitete zylindrische Kavität 27 eingesetzt werden kann, so dass Sie durch den Zapfen 18 bereits in zwei Bewegungsrichtungen fixiert ist, nämlich längs und quer, d.h. horizontal zum Kieferkamm. Damit sie auch in der Vertikalen sowie in Drehrichtung um die Mittelpunktsachse 23 des Zapfens 18 fixiert wird, kann die Schablone 10 über die Bohrungen 19 mittels Schrauben auf dem Kieferknochen 29 festgeschraubt werden.

Der Zapfen 18 ist in einem Teilbereich, der in der Verlängerung eines Führungskanals 15 steht, abgeflacht. Die entsprechende Abflachung 25 bildet hierbei die Verlängerung der oberen Innenfläche 26 eines Führungskanals 15, siehe Figuren 14 und 15. Die Abflachung 25 bildet mit der Axialebene 22 durch den Zapfen 18 einen Winkel γ1 von 24,8°. Dieser Winkel entspricht folglich dem Winkel y1, den die Oberseite 7 eines Verankerungsflügels 2 des Kieferimplantats 1 gemäß erster Ausführungsvariante mit der Axialebene 22 durch den lmplantatkörper 9 einschließt.

Der Winkel, mit dem sich eine Erweiterung 16 respektive der Führungskanal 15 schräg nach oben erstreckt, entspricht dem Winkel α1, den die Unterseite 8 eines Verankerungsflügels 2 gemäß erster Ausführungsvariante des erfindungsgemäßen Kieferimplantats 1 mit der Horizontalen einschließt.

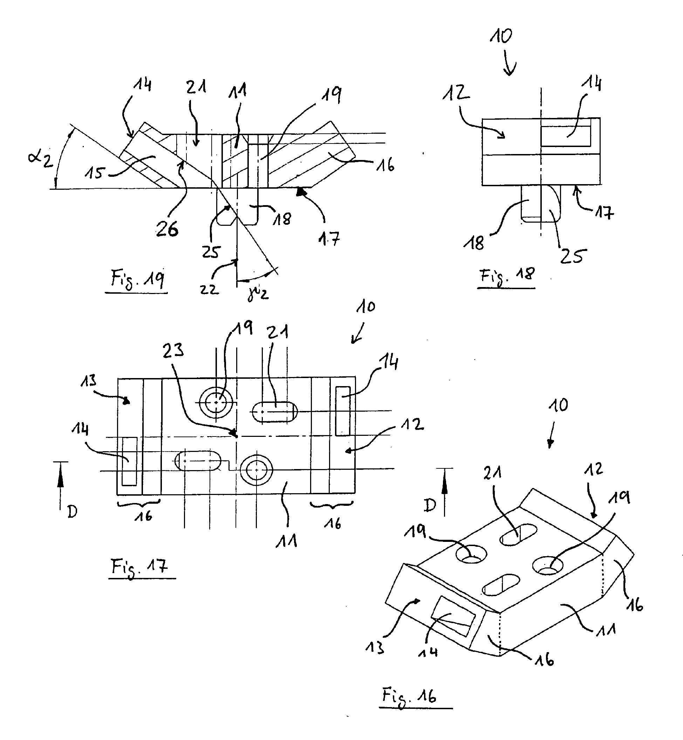

Die Figuren 16 bis 19 zeigen eine zweite Ausführungsvariante der erfindungsgemäßen Schablone 10, die mit dem Kieferimplantat 1 gemäß der zweiten Ausführungsvariante korrespondiert. Sie unterscheidet sich von der ersten Ausführungsvariante lediglich darin, dass ihre Länge in Richtung der Führungskanäle 15 größer ist als bei der ersten Ausführungsvariante, und dass der Winkel α2, in dem sich die Erweiterungen 16 und auch die Führungskanäle 15 schräg nach oben erstrecken geringer ist. Der Winkel α2 beträgt etwa 35°. Dieser kleinere Winkel α2 bedingt, dass die erfindungsgemäße Schablone 10 in Längsrichtung breiter ausgebildet ist, damit die Führungskanäle 15 ausreichend Führungsfläche für die Sägewerkzeuge 13 bereitstellen können. Im Übrigen entspricht die Schablone 10 gemäß der zweiten erfindungsgemäßen Ausführungsvariante im Wesentlichen der ersten Ausführungsvariante, so dass auf die Darstellung und die Bezugnahme auf die Figuren 12 bis 15 verwiesen werden kann.

Die Figuren 20 und 21 zeigen ein Sägewerkzeug 30, dass zur Ausbildung der Teilkavität 28 in dem Kieferknochen 29 für ein Kieferimplantat 1 gemäß erster Ausführungsvariante verwendet werden kann. Das Sägewerkzeug 30 weist einen Einspannzapfen 31 von im Wesentlichen rundem Querschnitt auf, dessen endseitiger Bereich in ein Piezogerät einspannbar ist. Der Einspannzapfen ist an einem Hauptteil 33 angesetzt, insbesondere einstückig angeformt, der in seinem mittleren Bereich 34 einen im Wesentlichen rechteckigen Querschnitt aufweist. Der Vorderbereich 35 des Sägewerkzeugs 30 ist im Längsschnitt keilförmig ausgebildet. Die Keilform wird dadurch hergestellt, dass der Hauptteil 33 im vorderen Bereich in einem Winkel δ1 abgeflacht ist, der zusammen mit dem Winkeln γ1 den Winkel α1bildet. Der vordere Bereich 35 des Sägewerkzeugs 30 bildet vollumfänglich den wirksamen Werkzeugbereich. ln diesem Bereich ist das Sägewerkzeug 30 diamantiert, so dass eine Vibration des Sägewerkzeugs 30, die durch das Piezogerät erzeugt wird, eine Feilwirkung bewirkt, mittels welcher Knochenmaterial entfernt werden kann. Figur 21 zeigt das Werkzeug 30 in einer perspektivischen Darstellung.

### Bezugszeichenliste:

1 Kieferimplantat
2 Verankerungsflügel
3 Vorderkante eines Verankerungsflügels
4 Rückseite eines Verankerungsflügels
5 Schwerpunktsachse eines Verankerungsflügels
6 Vertiefung
7 Oberseite eines Verankerungsflügels
8 Unterseite eines Verankerungsflügels
9 lmplantatkörper
10 Schablone
11 Grundkörper
12 Seite des Grundkörpers
13 Seite des Grundkörpers
14 Öffnung
15 Führungskanal
16 Erweiterung
17 Unterseite des Grundkörpers
18 Zapfen
19 Bohrung
20 Gewinde
21 Ausspülöffnung
22 Axialebene
23 Mittelpunktsachse
24 Bodenfläche
25 Abflachung
26 obere Innenfläche des Führungskanals
27 Kavität für lmplantatkörper
28 Kavität für Verankerungsflügel
29 Kieferknochen
30 Sägewerkzeug
31 Einspannzapfen
32 wirksamer Werkzeugbereich
33 Hauptteil
34 mittlerer Bereich
35 vorderer Bereich

## Patentansprüche

1. Schablone (10) zum Einbringen einer Kavität (28) in einen Kieferknochen (29), in die ein enossales Kieferimplantat (1) einsetzbar ist, das einen zentralen Implantatkörper (9) aufweist, an dem zumindest ein im Querschnitt keilförmiger Verankerungsflügel (2) angeformt ist, von dem sich zumindest die Vorderkante (3) und/oder die Rückseite (4) und/oder die Schwerpunktsachse (5) sekantial von dem lmplantatkörper (9) wegerstreckt, wobei die Schablone einen im Wesentlichen quaderförmigen Grundkörper (11) aufweist, der mit seiner Unterseite (17) auf den Kieferknochen aufsetzbar ist, **dadurch gekennzeichnet, dass** an wenigstens einer Seite (12, 13) eine Öffnung (14) für ein Sägewerkzeug (30) vorgesehen ist, an die sich ein Führungskanal (15) zur Führung des Sägewerkzeugs (30) anschließt, der sich schräg durch den Grundkörper (11) zu dessen Unterseite (17) erstreckt.

2. Schablone (10) nach Anspruch 1, **dadurch gekennzeichnet, dass** der Führungskanal (15) einen rechteckigen Querschnitt aufweist.

3. Schablone (10) nach Anspruch 1 oder 2, **dadurch gekennzeichnet, dass** der Grundkörper (11) in Erstreckungsrichtung des Führungskanals (15) durch eine Erweiterung (16) verlängert ist.

4. Schablone (10) nach einem der Ansprüche 1 bis 3, **dadurch gekennzeichnet, dass** an ihrer Unterseite (17) ein zentraler Zapfen (18) zum Einsetzen der Schablone (10) in eine im Kieferknochen eingebrachte Bohrung angeformt ist.

5. Schablone (10) nach Anspruch 4, **dadurch gekennzeichnet, dass** der Zapfen (18) in einem Teilbereich, der in der Verlängerung des Führungskanals (15) steht, abgeflacht ist.

6. Schablone (10) nach einem der Ansprüche 1 bis 5, **dadurch gekennzeichnet, dass** sie eine zweite Öffnung (13) für ein Sägewerkzeug (30) aufweist, die auf der der ersten Öffnung (13) gegenüberliegen Seite angeordnet ist, wobei sich an die zweite Öffnung (13) ein zweiter Führungskanal (15) zur Führung des Sägewerkzeugs (30) anschließt, der sich schräg durch den Grundkörper (11) zu dessen Unterseite. (17) erstreckt.

7. Schablone (10) nach Anspruch 6, **dadurch gekennzeichnet, dass** die beiden Führungskanäle (15) in Richtung der Breite der Schablone (10) zueinander versetzt sind.

8. Schablone (10) nach Anspruch 6 oder 7, **dadurch gekennzeichnet, dass** die beiden Führungskanäle (15) in Richtung der Breite der Schablone (10) zur Mitte der Breite der Schablone (10) heranreichen.

9. Schablone (10) nach einem der Ansprüche 1 bis 8, **dadurch gekennzeichnet, dass** sie wenigstens eine Bohrung (19) zur Aufnahme eines Befestigungsmittels zur Fixierung der Schablone (10) auf dem Kieferknochen (29) aufweist.

10. Schablone (10) nach einem der Ansprüche 1 bis 9, **dadurch gekennzeichnet, dass** sie oberhalb eines Führungskanals (15) eine Ausspülöffnung (21) aufweist, die sich in den entsprechenden Führungskanal (15) hineinerstreckt.

11. Schablone (10) nach einem der Ansprüche 1 bis 10, **dadurch gekennzeichnet, dass** sie 180°-symmetrisch zu ihrer Mittelpunktsachse (23) ist.

12. Enossales Kieferimplantat (1) zum Einsetzen in eine in einem Kieferknochen (29) vorbereitete Kavität (27, 28), umfassend einen zentralen lmplantatkörper (9), an dem zumindest ein Verankerungsflügel (2) angeformt ist, **dadurch gekennzeichnet, dass** der Verankerungsflügel (2) im Querschnitt keilförmig ausgebildet ist und sich zumindest die Vorderkante (3) und/oder die Rückseite (4) und/oder die Schwerpunktsachse (5) des Verankerungsflügels (2) sekantial von dem lmplantatkörper (9) wegerstreckt.

13. Kieferimplantat (1) nach Anspruch 12, **dadurch gekennzeichnet, dass** der Profilquerschnitt des Verankerungsflügels (2) über seine sekantiale Länge gleich bleibt.

14. Kieferimplantat (1) nach Anspruch 12 oder 13, **dadurch gekennzeichnet, dass** an dem Implantatkörper (9) zwei sich gegenüberliegende Verankerungsflügel (2) angeformt sind.

15. Kieferimplantat (1) nach einem der Ansprüche 12 bis 14, **dadurch gekennzeichnet, dass** die sekantialen Schwerpunktachsen (5) der gegenüberliegenden Verankerungsflügel (2) zu dem Durchmesser eines Schnittkreises durch den lmplantatkörper (9) in einer Radialebene im gleichen Maß entgegengesetzt versetzt sind.
